# EUROPEAN PATENT APPLICATION

(11) **EP 3 511 791 A1**
(43) Date of publication of application: **17.07.2019**
(21) Application number: 16915727.8
(22) Date of filing: 09.09.2016
(51) Int. Cl.: G05B 19/418, B23Q 41/00, B23Q 41/02, G05B 19/18

(54) **MACHINING SYSTEM**

(71) Applicant: Makino J Co., Ltd., Aiko-gun Kanagawa 243-0303 (JP)
(72) Inventor: KASHIHARA, Hirokazu, Kanagawa 243-0303 (JP); MURAKAMI, Noboru, Kanagawa 243-0303 (JP); OHSHIMA, Taishi, Kanagawa 243-0303 (JP)
(74) Representative: Lavoix
(86) International application number: PCT/JP2016/076688
(87) International publication number: WO 2018/047309

(57) **Abstract**

A machining system (100) which includes a plurality of machine tools (110, 120, 130, 140) each having an independent operation part and controller, and shared peripheral equipment (150) associated with all of the plurality of machine tools, includes a shared controller (160) for the shared peripheral equipment which is operable by each of the operation parts of the plurality of machine tools, wherein the shared controller includes an authorization part (162) for granting operation authority to one of the operation parts (112, 122, 132, 142) of the plurality of the machine tools.

## Description

### FIELD

The present invention relates to a machining system comprising a plurality of machine tools each having an independent operation part and controller, and shared peripheral equipment associated with the plurality of machine tools.

### BACKGROUND

Patent Literature 1 discloses a machining system comprising a portable teaching operation board which is connected to a machine tool controller by a network cable and a robot controller configured so as to display information related to a machine tool acquired from the machine tool controller via the network cable on a display of the teaching operation board.

Patent Literature 2 discloses a machining system comprising an operation board of a portable gantry loader capable of switching between an interlock-enabled mode in which movement of a transfer machine is prohibited under certain conditions and an interlock-disabled mode in which movement of the transfer machine is not prohibited even under the certain conditions, wherein a machine tool controller controls the movement of the gantry loader in accordance with contents instructed using the operation board.

### [CITATION LIST]

### [PATENT LITERATURE]

[PTL 1] Japanese Unexamined Patent Publication (Kokai) No. 2010-277425
[PTL 2] Japanese Unexamined Patent Publication (Kokai) No. 2006-026818

### SUMMARY

### [TECHNICAL PROBLEM]

In the machining system described in Patent Literature 1, even when the robot and the machine tool are surrounded by a safety fence, since information regarding the machine tool can be checked from outside the safety fence by means of the portable operation board, the need for workers to enter the safety fence to check the status and settings of the machine tool is reduced, and as a result, number of times that the machine tool is stopped is reduced. However, in the machining system of Patent Literature 1, since it is necessary to carry the portable operation board, operability is poor. For example, in the case in which teaching of the robot is performed in the vicinity of the machine tool, when it is necessary for the operator to manually operate the robot as the transfer device while watching, in some cases, the operator may not be able to approach the vicinity of an area requiring manual operation due to restrictions of the portable operation board.

In the machining system described in Patent Literature 2, since the movement of the transfer machine can be controlled from the operation board of the machining device, in particular in the case in which the controller of the transfer machine is separated from the site, the movement of the transfer machine can be manually operated while being viewed by the operator, whereby the operability of the transfer machine improves. However, in the machining system of Patent Literature 2, even if interlocking is enabled or disabled, there is a risk that control commands will be sent from a plurality of machining devices to the transfer machine at the same time, whereby there is a problem regarding the safety of the transfer machine.

In order to solve such problems of the prior art, the present invention aims to provide a machining system comprising a plurality of machine tools each having an independent operation part and controller, and shared peripheral equipment associated with the plurality of machine tools, in which it is possible to safely operate the shared peripheral equipment in the vicinity of the machine tool.

### [SOLUTION TO PROBLEM]

In order to achieve the above object, according to the present invention, there is provided a machining system comprising a plurality of machine tools each having an independent operation part and controller, shared peripheral equipment associated with all of the plurality of machine tools, and a shared controller for the shared peripheral equipment which is operable by each of the operation parts of the plurality of machine tools, wherein the shared controller comprises an authorization part for granting operation authority over the shared peripheral equipment to one of the operation parts of the plurality of the machine tools.

### [ADVANTAGEOUS EFFECTS OF INVENTION]

According to the present invention, in the machining system, which comprise shared peripheral equipment associated with the plurality of machine tools, the shared peripheral equipment can be safely operated in the vicinity of the machine tools while eliminating the operation parts of the shared peripheral equipment.

### BRIEF DESCRIPTION OF DRAWINGS

FIG. 1 is an approximate plan view showing an example of the machining system to which the present invention is applied.
FIG. 2 is a front view of the machining system of FIG. 1.
FIG. 3 is a front view showing an example of an operation board forming an operation part.
FIG. 4 is a block diagram showing the machining system according to a first embodiment of the present invention.
FIG. 5 is a schematic view showing an example of a gantry loader operation window displayed on the display of an operation board.
FIG. 6 is a front view showing another example of a machining system to which the present invention is applied.
FIG. 7 is a block diagram showing a machining system according to a second embodiment of the present invention.

### DESCRIPTION OF EMBODIMENTS

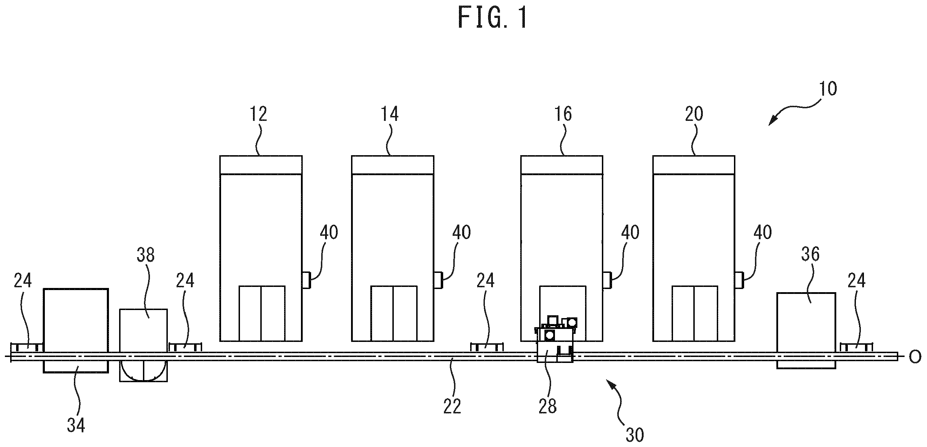

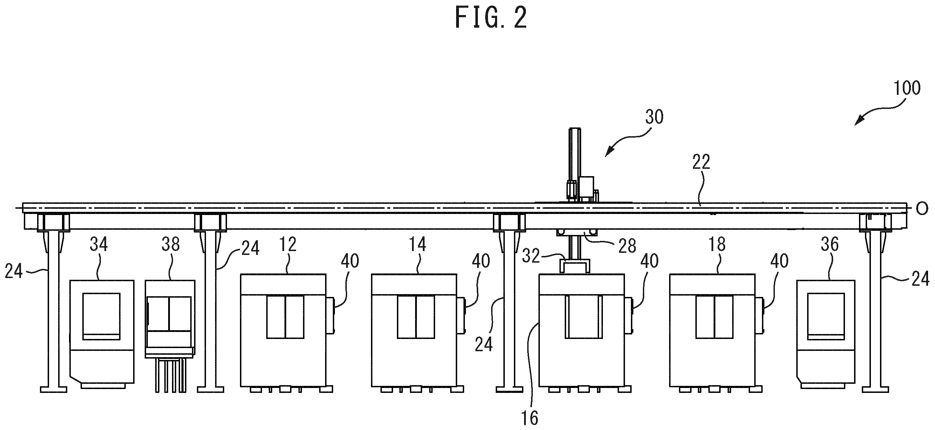

An example of the machining system used in the present invention will be described with reference to FIGS. 1 and 2. The machining system 10 comprises a plurality of, in the embodiment of FIGS. 1 and 2, four, machine tools 12, 14, 16, 18 arranged in a side-by-side manner, and a gantry loader 30 as shared peripheral equipment associated with all of the plurality of machine tools 12, 14, 16, 18. In the present embodiment, the machine tools 12, 14, 16, 18 are machining centers of identical types. The machining centers can be horizontal machining centers which comprise rotating spindles (not illustrated) oriented in the horizontal directions, tables (not illustrated) facing tools (not illustrated) mounted on the tips of the horizontal rotating spindles, X, Y, and Z orthogonal three linear feed axes (not illustrated) for moving the tools and the tables relative to each other, and tool exchange devices (not illustrated). Each of the horizontal machining centers may further comprise one or two rotary linear, for example, one or both of an A-axis and C-axis. The machine tools 12, 14, 16, 18 may be machine tools of different types. In FIGS. 1 and 2, the machine tools 12, 14, 16, 18 are housed within a cover or splashguard. An operation board 40 is attached to a side surface of the cover or splashguard.

The gantry loader 30 comprises a rail 22 extending along an axis O which extends in the longitudinal direction, which is the horizontal direction perpendicular to the spindles of the machine tools 12, 14, 16, 18. The rail 22 is arranged above the machine tools 12, 14, 16, 18 by means of a plurality of supports 24. The gantry loader 30 comprises a carriage 28 which reciprocates along the rail 22, an arm attached so as to be movable in the upward and downward directions relative to the carriage 28, and a hand 32 attached to the lower end of the arm. The hand 32 may be attached to the carriage 28 so as to further be able to move in the horizontal direction perpendicular to the rail 22.

The machining system 10 further comprises a workpiece setup station 34 and a workpiece removal station 36. Unmachined workpieces are introduced into the machining system 10 from the workpiece setup station 34, and machined workpieces are discharged to the outside of the machining system 10 from the workpiece removal station 36 by the operator. The gantry loader 30 supplies workpieces introduced into the workpiece setup station 34 to the machine tools 12, 14, 16, 18, and discharges machined workpieces from the machine tools 12, 14, 16, 18 to the workpiece removal station 36.

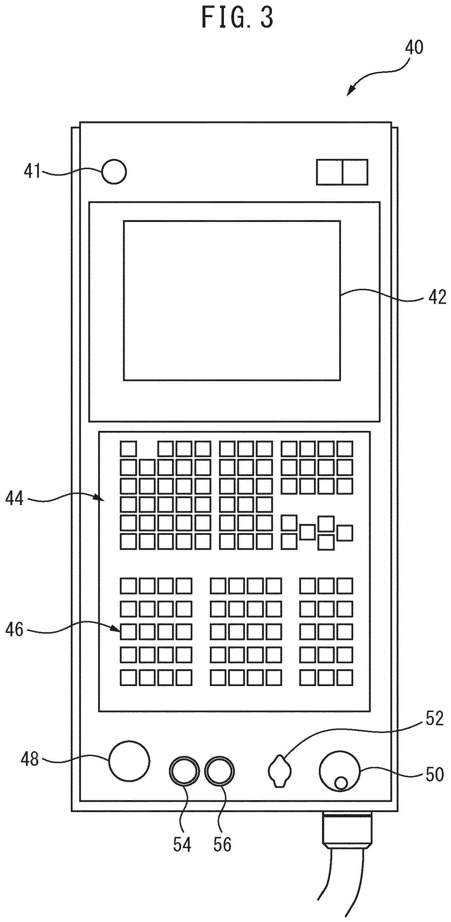

An example of the operation board 40 constituting a control part of the present invention will be described with reference to FIG. 3. The operation board 40 comprises a display constituted by a touch panel with which a desired portion can be selected by touching the screen, and key input parts 44, 46 in which a plurality of key switches are arranged. By pressing the key switches of the key input parts 44, 46, predetermined characters or numerals can be input. Furthermore, the operation board 40 comprises operation switch parts 52, 54, 56 for performing selection of predetermined operations, an override setting part 52 for performing the setting of override values, and an emergency stop button 48. The override setting part 52 can set, for example, the override value of the rotation speed of the spindle or the override value of the feed speed of machining. The operation board 40 further comprises a jog dial 50 for performing individual jog feed operations of each of the X-axis, Y-axis, and Z-feed axes. The operation board 40 may further comprise a lamp 41 for externally displaying that the gantry loader 30, which is described later, has operation authority.

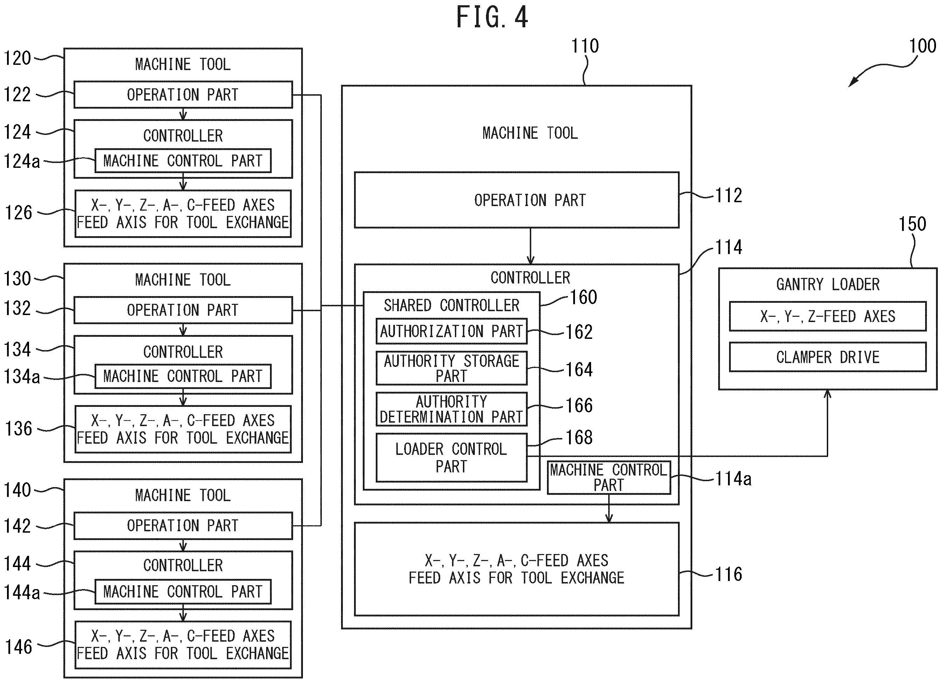

Referring to FIG. 4, the machining system 100 according to a first embodiment of the present invention comprises a plurality of, in FIG. 4, four as in FIGS. 1 and 2, machine tools 110, 120, 130, 140. The machine tools 110, 120, 130, 140 comprise operation parts 112, 122, 132, 142 each constituted by the operation board of FIGS. 1 and 2, controllers 114, 124, 134, 144, and feed axis devices 116, 126, 136, 146 composed of the X, Y, and Z orthogonal three feed axes, the A-axis and C-axis, which are two rotary feed axes, and at least one feed axis for exchanging tools. The controllers 114, 124, 134, 144 for controlling the machine tools 110, 120, 130, 140 can be constituted by, for example, NC devices, and comprise machine control parts 114a, 124a, 134a, 144a for controlling the feed axis devices 116, 126, 136, 146. The machine control parts 114a, 124a, 134a, 144a may control the rotation of the spindles of the machine tools 110, 120, 130, 140.

In the present invention, the controller 114 of one machine tool 110 of the plurality of machine tools 110, 120, 130, 140 comprises a shared controller 160 in addition to the machine control part 114a. The shared controller 160 can be formed as a part of the NC device of the machine tool 110 in terms of software. The shared controller 160 comprises, as primary constituent elements, an authorization part 162, an authority storage part 164, an authority determination part 166, and a loader control part 168.

When the shared controller 160 has received an authority request from one of the operation parts 112, 122, 132, 142 of the machine tools 110, 120, 130, 140, the authorization part 162 grants authority in accordance with the authority request. The operation part of the operation parts 112, 122, 132, 142 of the machine tools 110, 120, 130, 140 to which authority has been granted is stored in the authority storage part 164. The authority determination part 166 determines whether or not a command transmitted to the gantry loader 150 received by the shared controller 160 from the operation part 112, 122, 132, 142 of the machine tools 110, 120, 130, 140 is a command from the operation part which has authority, and when the command is from the operation part which has authority, the command is transmitted to the loader control part 168. The loader control part 168 controls the orthogonal three feed axes of the gantry loader 150 and the clamping and unclamping movement of the hand 32 based on the command. The control of the orthogonal three feed axes of the gantry loader 150 can be performed as control of the three feed axes added to the five feed axes of the NC device of the machine tool 110.

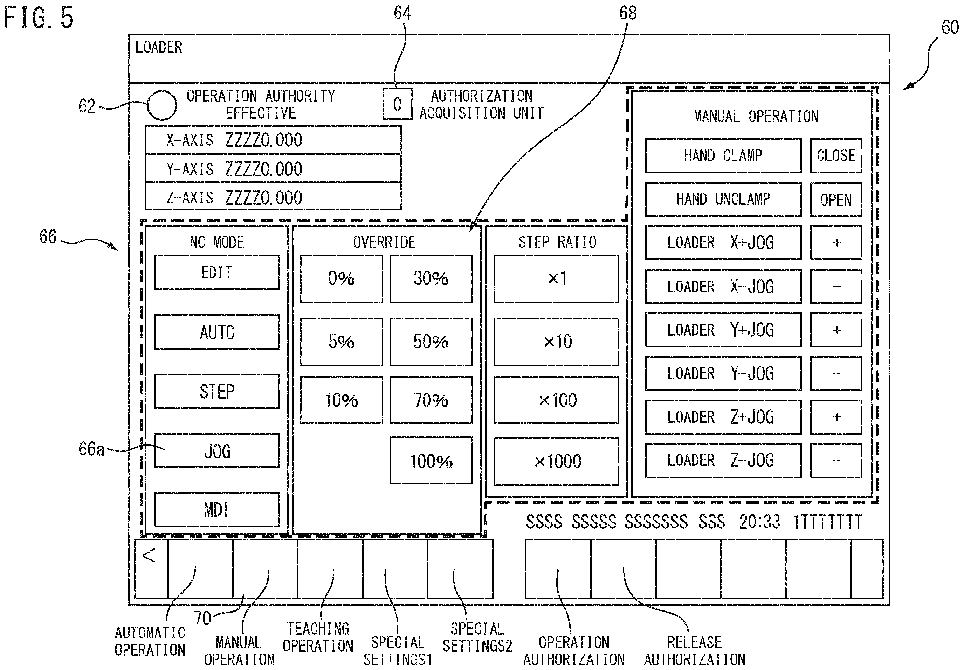

Next, an operation window 60 of the gantry loader 30, which is displayed on the displays 42 of the operation boards 40 constituting the operation parts 112, 122, 132, 142, will be described with reference to FIG. 5.

The operation window 60 includes an operation authority icon 62, an operation authority acquisition machine identifier 64, an operation mode selection button 66, an override selection button 68, and a manual operation button 70.

When an operator operates one of the operations boards of the machine tools 110, 120, 130, 140 and opens the operation window 60 of the gantry loader, for example, when the operator taps or clicks the manual operation button 70, the authority request is transmitted from the operation part to the shared controller 160 of the machine tool 110. At that time, when the authorization part 162 of the shared controller 160 determines that the gantry loader 150 is not being operated by other operation parts, the authorization part 162 grants authority to operate the gantry loader 150 to the operation part in accordance with the authority request. For example, the authorization part 162 monitors the commands from the operation part which has authority, and when a predetermined interval has elapsed since the last command received from the operation part, operation authority can be granted to other operation parts. Conversely, when the predetermined interval has not elapsed since the last command received from the operation part, it can be determined that the operations of the operation part have not finished, and authority requests from other operation parts are denied.

When operation authority is received from the authorization part 162, an operation authority icon 62 indicating the operation authority has been granted is displayed on the operation window 60. In addition to the operation authority icon 62, a lamp 41 indicating that operation authority has been received may be illuminated on the operation board 40 of the corresponding operation part having operation authority. Further, the operation authority acquisition machine identifier 64, which is a machine symbol or number for identifying the machine tool corresponding to the operation part which currently has operation authority, can be displayed on all of the displays 42 of the machine tools 110, 120, 130, 140.

When operation authority is acquired, operation of the gantry loader 150 becomes possible in the operation window 60 of the gantry loader. For example, controlling of the movement of carriage 28 and the hand 32 of the gantry loader 30 (150) can be performed with the jog dial of the operation board 40 by tapping or clicking the jog button 66a from among the manual operation modes, and selecting the desired jog override amount from the override selection buttons 68 or teaching of the gantry loader 30 (150) can be performed by means of manual operation.

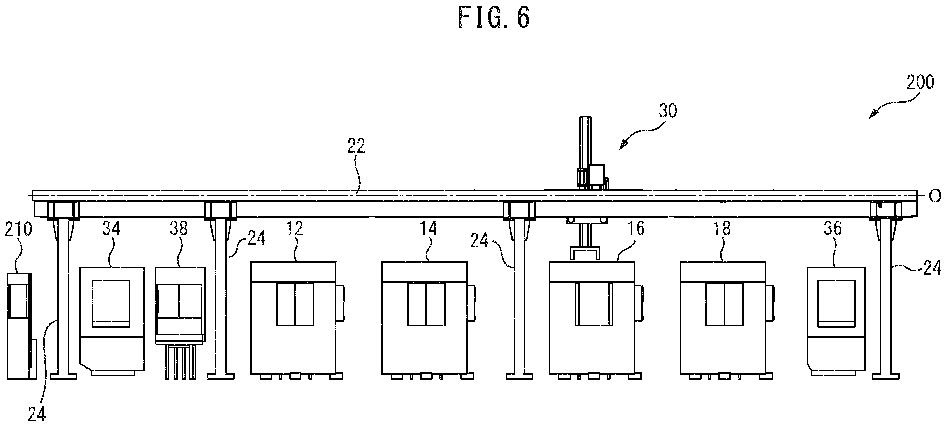

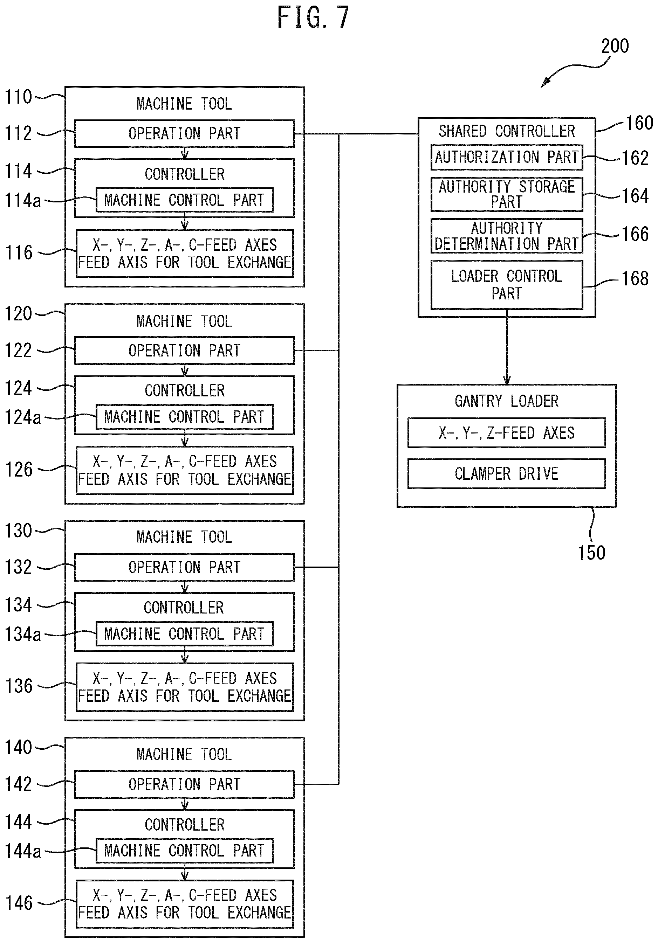

Next, a second embodiment of the present invention will be described with reference to FIGS. 6 and 7.

In the first embodiment, the controller 114 of one machine tool 110 among the plurality of machine tools 110, 120, 130, 140 has the shared controller 160. However, in the second embodiment, the shared controller 160 is independent of the controllers 114, 124, 134, 144 of the machine tools 110, 120, 130, 140, as shown in FIG. 7. Thus, the machine system 200 comprises an independent controller 210 constituting the shared controller 160, as shown in FIG. 6. In the present embodiment, all of the controllers 114, 124, 134, 144 of the plurality of machine tools 110, 120, 130, 140 are connected with the shared controller 160 in parallel. The mode of operation of the present embodiment is the same as that of the first embodiment.

Further, operation boards (not illustrated) identical to the operation board 40 may be arranged in the workpiece setup station 34, the workpiece removal station 36, and/or the workpiece inspection station 38, these operation boards may be connected to the shared controller 160, and the gantry loader 150 can be operated from the workpiece setup station 34, the workpiece removal station 36, and/or the workpiece inspection station 38.

Though the shared peripheral equipment is a gantry loader in the embodiments described above, the present invention is not limited thereto. The shared peripheral equipment may be, for example, the workpiece setup station 34, the workpiece removal station 36, and/or the workpiece inspection station 38. In this case, operation of the stations can be enabled only when operation authority has been acquired by the operation part of the machine tool in the vicinity of the respective station. For example, in the example of FIG. 1, the workpiece setup station 34 and/or the workpiece inspection station 38 can be operated from the operation board of the machine tool 12 when operation authority has been acquired by the operation part (operation board 40) of the machine tool 12 arranged in the vicinity thereof. Furthermore, the workpiece removal station 36 can be operated from the operation board 40 of the machine tool 20 when operation authority has been acquired by the operation part of the machine tool 20 arranged in the vicinity thereof.

Further, when the position of the carriage 28 on the rail 22 is controlled as the X-axis of the gantry loader 150 among the feed axes of the gantry loader 150, it can be understood from the coordinates of the X-axis of the gantry loader 150 which of the machine tools the gantry loader 150 is near. Even if the operation authority is provided in accordance with the coordinate of the X-axis of the gantry loader 150, restrictions can be added to the operation. Using the case in which a workpiece is lowered into the machine tool 12 by the gantry loader 150 as an example, when the hand 32 of gantry loader 150 is lowered, the hand 32 and workpiece enter the interior of the splashguard of machine tool 12, which prevents scattering of swarf during machining. At this time, the splashguard of the machine tool 12 obstructs the view of the operator performing the operation in the operation parts 40 of the machine tools 14, 16, 18, and the hand 32 and the workpiece cannot be visually inspected. If the hand 32 and workpiece are lowered in a state in which they cannot be viewed by the operator, the hand 32 or workpiece may collide with the table of the machine tool 12 for arrangement of the workpiece or a jig for attachment of the workpiece, and there is a risk that the machine tool 12 or the gantry loader 150 may become damaged. Therefore, the acquisition of operation authority is restricted in accordance with the X-axis coordinate of the gantry loader 150.

When the X-axis coordinate of the gantry loader 150 is the vicinity of the splashguard of the machine tool 12, even if operation authority is acquired by one of the operation parts 40 of the machine tools 14, 16, 18, a lowering operation of the hand 32 is prohibited. A lowering operation of the hand 32 can only be executed when the operation part 40 of machine tool 12 in vicinity of gantry loader 150 has acquired operation authority. The shared controller 160 stores operation limits that impose restrictions on the operation authority of each operation part 40 in accordance with the X, Y, and Z coordinate values of the gantry loader 150.

### REFERENCE SIGNS LIST

- 10: Machining System
- 12, 14, 16, 18: Machine Tool
- 22: Rail
- 24: Support
- 28: Carriage
- 30: Gantry Loader
- 32: Hand
- 34: Workpiece Setup Station
- 36: Workpiece Removal Station
- 38: Workpiece Inspection Station
- 40: Operation Board
- 100: Machining System
- 110, 120, 130, 140: Machine Tool
- 150: Gantry Loader (Shared Peripheral Equipment)
- 160: Shared Controller
- 162: Authorization Part
- 164: Authority Storage Part
- 166: Authority Determination Part

## Claims

1. A machining system comprising:
a plurality of machine tools each having an independent operation part and controller,
shared peripheral equipment associated with all of the plurality of machine tools, and
a shared controller for the shared peripheral equipment which is operable by each of the operation parts of the plurality of machine tools, wherein
the shared controller comprises an authorization part for granting operation authority over the shared peripheral equipment to one of the operation parts of the plurality of the machine tools.

2. The machining system according to claim 1, wherein the shared peripheral equipment is a workpiece transportation device for supplying a workpiece to each of the plurality of machine tools and for receiving and discharging a workpiece from each of the plurality of machine tools.

3. The machining system according to claim 2, wherein the workpiece transportation device is a gantry loader comprising a rail arranged in the vicinity of the plurality of machine tools and extending along a predetermined axis, a carriage movable along the rail, an arm operable relative to the carriage, and a hand attached to the tip of the arm for gripping a workpiece.

4. The machining system according to claim 3, further comprising a workpiece setup station, a workpiece removal station, and a workpiece inspection station spaced apart from each other along the predetermined axis.

5. The machining system according to claim 1, wherein each of the operation parts of the plurality of machine tools comprises authority display means for externally displaying that the operation part has operation authority when operation authority has been granted.

6. The machining system according to claim 5, wherein the operation parts are operation boards provided on side surfaces of the machine tools, the operation boards comprise displays for displaying at least an operation state of the machine tools, and it is displayed on the display that the operation part has operation authority.

7. The machining system according to claim 6, wherein the operation part of the machine tool that currently has operation authority is displayed on the displays of the operation parts of all of the machine tools.

8. The machining system according to claim 1, wherein the shared controller is formed as a part of an NC device of one of the plurality of machine tools.

9. The machining system according to claim 1, wherein the NC device forming the shared controller is connected to the shared peripheral equipment, and the NC devices of all of the machine tools other than the machine tool having the NC device connected to the shared peripheral equipment are connected to the NC device forming the shared controller.

10. The machining system according to claim 6, wherein an operation screen of the shared peripheral equipment is displayed on each of the displays of the plurality of machine tools.

11. The machining system according to claim 1, wherein the shared controller is a controller arranged so as to be independent from the NC devices of all of the plurality of machine tools.

12. The machining system according to claim 1, wherein the shared controller limits operation of the operation part in accordance with a coordinate value of a feed axis of the shared peripheral equipment.
